# EUROPEAN PATENT SPECIFICATION

(11) **EP 4 311 709 B1**
(45) Date of publication and mention of the grant of the patent: **12.03.2025**
(21) Application number: 22198738.1
(22) Date of filing: 29.09.2022
(51) Int. Cl.: B60K 35/10, B60K 35/28, G06V 40/16, G06F 3/14

(54) **ON-BOARD PASSENGER ASSISTANCE SYSTEM AND METHOD FOR VEHICLE AND VEHICLE**
BORD-PASSAGIERASSISTENZSYSTEM UND -VERFAHREN FÜR FAHRZEUG UND FAHRZEUG
SYSTÈME ET PROCÉDÉ D'ASSISTANCE DE PASSAGER EMBARQUÉ POUR VÉHICULE ET VÉHICULE

(30) Priority: 26.07.2022 EP 22186974
(43) Date of publication of application: 31.01.2024
(73) Proprietor: Volvo Car Corporation, 405 31 Göteborg (SE)
(72) Inventor: FEI, Zhennan, 40531 Göteborg (SE); ZHANG, Xuan, Göteborg, 40531 (CN)
(74) Representative: Maiwald GmbH

(56) References cited:
- US-A1- 2019 162 549
- US-A1- 2021 261 050

## Description

### TECHNICAL FIELD

The present invention relates to an on-board passenger assistance system for a vehicle, a vehicle comprising such on-board passenger assistance system, and an on-board passenger assistance method for a vehicle.

### BACKGROUND ART

Automated driving technology provides comfort to occupants of a vehicle by taking over operational decision to propel the vehicle without any human control. Accordingly, a driver of the vehicle may engage in other tasks than driving. An infotainment system is generally integrated in the vehicle to provide information and entertainment visually and audibly to the occupants. Thus, a driver can utilize the infotainment system via a human-machine interface during the vehicle travels in an automated driving mode. As one of the several possible tasks, the driver can actively monitor an ongoing situation inside the vehicle, which may be not visible to the driver.

US 2019/162549 A1 discloses a cognitive state vehicle navigation based on image processing. Image-based analysis techniques are used for cognitive state vehicle navigation, including an autonomous or a semi-autonomous vehicle. Images including facial data of a vehicle occupant are obtained using an in-vehicle imaging device. The vehicle occupant can be an operator of or a passenger within the vehicle. A first computing device is used to analyze the images to determine occupant cognitive state data. The analysis can occur at various times along a vehicle travel route. The cognitive state data is mapped to location data along the vehicle travel route. Information about the vehicle travel route is updated based on the cognitive state data. The updated information is provided for vehicle control. The updated information is rendered on a second computing device. The updated information includes road ratings for segments of the vehicle travel route. The updated information includes an emotion metric for vehicle travel route segments.

US 2021/261050 A1 teaches real-time contextual vehicle lighting systems and methods. A vehicle includes an internal lighting system with a plurality of lighting devices, which is capable of outputting different lighting configurations. Each lighting configuration is defined by a brightness of emitted light, a color of emitted light, a number and identity of the plurality of lighting devices that are turned on, and/or a time-based sequence of changes to the brightness or color of one or more of the plurality of lighting devices. The vehicle further includes one or more sensors and a processor communicatively coupled to the lighting system and the sensors. The processor causes the lighting system to output a first lighting configuration. Based on data captured by the sensors, the processor detects a trigger criterion has been satisfied. In response to detecting the satisfaction of the trigger criterion, the processor modifies a configuration of the lighting system to output a second lighting configuration.

### SUMMARY

Hence, there may be a need to provide an improved on-board passenger assistance system and/or method, which may facilitate a user to monitor a vehicle cabin, and particularly supporting the user in monitoring other passengers, identifying emotions and/or needs, and/or reacting to the identified needs accordingly.

The object of the present invention is at least partially solved or alleviated by the subject-matter of the appended independent claims, wherein further examples are incorporated in the dependent claims.

According to the subject-matter of claim 1, there is provided a, particularly virtual, on-board passenger assistance system for a vehicle.

The term "needs" relates to events, like certain emotions, feelings etc. that require action. For example, when a child is hungry, the child's hunger is a need that requires action, namely feeding the child. Another example for a need may be a child getting sleepy or cranky, wherein playing a song and/or reading a story may help the child falling asleep or may help lighting the child's mood. For example, a child's sleep may be an ambiguous event, that is, the child being sound asleep may represent an event that does not require action whereas the child sleeping restlessly may represent an event that does require action, e.g., playing a lullaby and/or changing the route to a quieter route etc. The user may be a driver of the vehicle and/or a front-passenger of the vehicle.

The passenger monitoring system may provide an integrated passenger monitoring system of a vehicle cabin. In particular, via the human-machine interface unit, the passenger monitoring system is able to provide the user with visual information about the vehicle cabin, particularly over an area, such as a rear seating area, of the vehicle, which is usually poorly visible, or even invisible, to the user, particularly, when the user is looking ahead towards the road. However, a position of the passenger to be monitored is not limited to the rear seating area but may be any position in the vehicle cabin.

The passenger monitoring unit may comprise at least one optical sensor such as a camera. The optical image sensor may be arranged at the position, where the passenger and/or a passenger seat of the passenger may be reliably monitored. For example, the optical image sensor may face the passenger and/or the passenger seat to be monitored. The passenger monitoring unit may be configured to capture at least one image of the passenger and generated image data. In other words, the passenger monitoring unit, particularly the optical image sensor, may also be able to generate photo image data and/or video image data.

The identifying module, particularly the neural network, is trained with images containing different facial expressions of passenger, e.g. babies, infants etc., labeled with reasons, and /or events, e.g., needs, which allow the identifying module to identify particularly needs accurately. The labeling of the images and/or at least an initial training of the neural network may be performed, e.g. by a development team of the OEM, before implementing the identifying module into the on-board passenger assistance system.

The planning module is configured to plan routes based on maps and/or traffic, e.g., to reach certain destinations and/or to adapt the route to a certain drive mode etc. For example, when the identifying module identifies that the monitored passenger, particularly an infant, need a change of diaper, the planning module may plan the route to the closest shopping mall, petrol station with toilets etc. In another example, the planning module may adapt the route to roads with less traffic, a lower maximum permitted speed etc., when the monitored passenger feels uncomfortable with the current traffic situation and/or is tired and tries to fall asleep etc.

The suggesting module then provides suggestions and/or information, e.g., the route adaptation planned by the planning module, playing a song, playing a video etc. to the user via the human-machine interface unit, e.g., visually via a display element of the human-machine interface unit, and/or audibly via an audible element of the human-machine interface unit. By this, the user may choose between different suggestions and/or may decline any suggestions provided by the suggesting module.

Thus, the on-board passenger assistance system allows adapting a currently monitored situation to improve its monitoring ability and/or assist a decision to be processed to react to the currently monitored situation, thereby improving a safety of the vehicle during traveling. In other words, the on-board passenger assistance system enables notifying the user when events, particularly related to feelings and needs of the monitored passenger, are identified during trips. Further, the on-board passenger assistance system provides the user with suggestions regarding possible actions to address the identified feelings and/or needs, as well as enables reminding the user to perform routine tasks, e.g., feeding of the passenger.

The human-machine interface unit may be configured to interact with the user. Accordingly, the human-machine interface unit may be able to receive an input from the user and to provide an output, particularly in response to the received input. Specifically, the human-machine interface unit may be configured to provide information of the passenger to be monitored to the user. The user's input may be entered to the human-machine interface unit via a touch control, a voice control and/or a gesture control of the user. The user's input may comprise at least one of annotating, recording and replaying the generated image data.

Further, the human-machine interface unit may be part of an infotainment system of the vehicle, and comprises at least a display element. The display element may be arranged in the user's visual field. Accordingly, the display element may be arranged at a front side of the user. For example, the display element may be integrated in a Center Stack Display (CSD), Head-up Display (HUD), Drivers Information Module (DIM) and/or Infotainment Head Unit (IHU). Further, the seating position of the user may vary depending on the size of the user and/or an activated driving mode of the vehicle. Therefore, the display element may be arranged such that it is positioned in a field of the user's view, e.g., facing the user, allowing a comfortable monitoring regardless of a seating position.

Further, it should be noted that, even if it is referred to a monitored passenger, the on-board passenger assistance system is able to monitor at least one passenger, but also more than one passenger. In case of more than one passenger, the on-board passenger assistance system, particularly the passenger monitoring system, may be able to monitor several passengers either in sequence or simultaneously.

The monitored passenger may be a baby or a child sitting in a child car seat. Specifically, in case of an infant carrier car seat, the driver may have difficulty to safely monitor the baby. In such a case, the passenger monitoring unit may be arranged to reliably generate image data of the baby. Additionally, or alternatively, the monitored passenger may be a disabled person, e.g., aided by an equipment. Thus, the passenger to be monitored may be a person requiring an assistance equipment, such as a wheelchair, respiratory equipment, etc. The passenger monitoring unit may be adapted to assist monitoring such disabled person or infirm person sitting in the vehicle. Further, the passenger monitoring nit may be adapted to monitor a pet, e.g. a dog. In such case, the identifying module may be trained to identify needs of such pet.

According to the invention, the on-board passenger assistance system comprises an annotating module being configured to receive the user's input annotating the generated image data being displayed on a display element of the human-machine interface unit. Additionally, or alternatively, the annotating module may be configured to receive the user's input annotating the generated image data being displayed on a display element of an external system. The external system may be a smartphone, a tablet etc. comprising an image data annotating mode, e.g., implemented through an app being installed on the external system. Thus, the annotating module may allow the user labeling the generated image data with the corresponding emotion, feeling, and/or need.

According to an example, the user's input may be a confirmation or correction of the identified need in the generated image data, and/or the user's input being an assignment of a need to a facial expression shown in the generated image data. Such input may allow the user to correct emotions, feelings and/or needs which have been misidentified by the identifying module, and/or to assign the generated image data emotions, feelings and/or needs, in case the identifying unit was unable to identify an emotion, feeling and/or need in the generated image data.

According to the invention, the neural network is configured to be continuously trained based on the user's input received by the annotating module. In other words, the neural network is configured to be continuously trained based on the generated image data being annotated by the user. This allowes the identifying unit, particularly the neural network, to continuously enhance the identification/recognition of emotions, feelings and/or needs based on facial expression not only in general, but specific to the monitored passenger, thereby increasing the accuracy of correctly identifying emotions, feelings and/or needs, particularly emotion, feelings and/or needs specific for the monitored passenger.

For example, the monitored passenger may be a child, the facial expressions of children may be very individual, that is, a certain facial expression may correspond to anger for one child, but for another child, the same certain facial expression may correspond to hunger. By continuously training the neural network with annotated generated image data, which correspond to individual or specific image data, the neural network may continuously enhance identifying/recognizing the emotions, feelings and/or needs of a certain monitored passenger correctly. Therefore, the on-board passenger assistance system may become more accurate and thus, more useful over time.

Further, training the neural network continuously may allow the on-board passenger assistance system, and particularly the identifying module, adapting to certain passengers and/or to changes in the meaning of facial expressions or of the facial expression itself over time. For example, in case, the monitored passenger may be a baby at first, which becomes a toddler over time etc., by continuously learning from the annotated generated image data, the neural network of the identifying unit, and therefore, the on-board passenger assistance system may be able to adapt to changes and thus, may be able to at least maintain a certain level of accuracy in identifying emotions, feelings and/or needs correctly.

According to an example, the suggesting module may be further configured to receive the user's input confirming and/or declining the provided suggestions/information, particularly via the human-machine interface unit. This may allow the user to choose a suggestion from several suggestion being preferred by the user. Further, it may allow the user to prevent the on-board passenger assistance system from performing a suggestion being unsuitable for the situation, etc.

According to an example, the identifying module may be configured to notify the user of the identified needs via the human-machine interface unit. The notification may be a visual notification e.g. via the display element and/or an acoustic notification, e.g., via an audio element. This may prevent the user from repeatedly checking on the monitored passenger, thereby increasing the safety of the vehicle during travelling, particularly in case the user is the driver of the vehicle.

According to an example, the passenger monitoring system may further comprise a control unit being configured to activate displaying the generated image data on a display element of the human-machine interface unit in case, an (unsupervised) autonomous driving mode is activated, and/or to deactivate displaying the generated image data on the display element of the human-machine interface unit in case, the autonomous driving mode is deactivated and no front-passenger is detected.

The control unit may be an electronic control unit (ECU). The control unit may include, for example, one or more central processing units (CPUs), graphic processing units (GPUs) dedicated to perform calculations/transaction and/or other processing devices. Further, the control unit may be able to communicate, control and/or retrieve information from the passenger monitoring unit via a wired or a wireless connection.

The control unit may be adapted to communicate with a drive pilot unit of the vehicle that may be configured to determine a driving mode and/or perform the determined driving mode. Specifically, the control unit may receive information indicating the driving mode such as manual, automated driving (AD) and/or advanced driver assistance system (ADAS). Further, the control unit may be adapted to communicate with a passenger detection unit of the vehicle that may be configured to determine the number and/or seating position of the passengers. Further, the control unit may be configured to decide if it is safe to display the generated image data via the human-machine interface based on the driving mode of the vehicle and/or the presence/absence of a front-passenger.

In other words, when the control unit receives the information that the, particularly unsupervised, autonomous driving mode is activated, the control unit may allow, particularly activate, displaying the generated image data on the display element of the human-machine interface unit regardless of whether a front-passenger is present. In case, the control unit receives the information that the, particularly unsupervised, autonomous driving mode is deactivated, the control unit may prevent, particularly deactivate, displaying the generated image data on the display element of the human-machine interface unit, when the control unit further receives the information that no front-passenger is present.

In case, the autonomous drive mode is deactivated but a front-passenger is present, the control unit may be configured to allow, particularly activate, displaying the generated image data on the display element, on request of the user, e.g., by the user's input via the human-machine interface unit indicating the user's wish to see the generated image data.

The control unit may be further configured to communicate with a driver monitoring system (DMS) of the vehicle, which may be configured to monitor the condition and/or attention of the driver, e.g., by monitoring the eyes of the driver (view direction, concentration etc.). In case, the autonomous driving mode is deactivated, the front-passenger is present and the generated image data is displayed on the display element, the control unit may deactivate displaying the generated image data on the display element, when the DMS determines that the driver is distracted by looking on the generated image data too often.

However, regardless of whether the generated image data may be displayed on the display element, the passenger monitoring unit may continue monitoring the passenger and generating respective image data. Accordingly, safety of the vehicle may be improved.

According to an example, the control unit of the passenger monitoring system may be further configured to store the generated image data in a storage medium, particularly regardless of the current driving mode. The passenger monitoring system may be coupled with an external storage medium element. Additionally, or alternatively, the storage medium may be integrated in the passenger monitoring system. The control unit may be adapted to transfer data from the passenger monitoring unit to the storage medium to store the generated image data via a wired or wireless connection. This may allow annotating the generated image data at a later stage, e.g., during a break, or at home via the external system etc. Thereby, no generated image data may be lost and therefore may be used to train the neural network of the identifying module.

The storage medium may be comprised in an internal computing device, such as a computer's SSD, or a removable device, such as an external HDD or universal serial bus (USB) flash drive. There are also other types of storage medium elements, including magnetic tape, compact discs (CDs) and non-volatile memory (NVM) cards. The storage medium may be also a cloud-based data storage.

According to an example, the annotating module may be (automatically) activated in case an (unsupervised) autonomous driving mode is activated and/or the annotating module being manually activatable in case the autonomous driving mode is deactivated.

While the (unsupervised) autonomous driving mode is activated, the vehicle is propelled without needing any human control. Thus, regardless of the fact whether the user is the driver and/or the front-passenger, annotating the generated image data by the user is safe. In case, the (unsupervised) autonomous driving mode is deactivated, displaying and/or annotating the generated image data may decrease the safety of the vehicle, in case the user may be the driver. However, annotating the generated image data by the front-passenger may not have any influence on the safety of the vehicle. Therefore, the annotating module may be manually activatable, allowing the front-passenger to annotate the generated image data also in case, the (unsupervised) autonomous driving mode is deactivated.

According to an example, the on-board passenger assistance system may be further connectable to external systems and/or apps, the external system being an audio device, and/or a video playing device, and/or a smartphone, tablet etc. The audio device and/or the video playing device may be implemented in the vehicle. Thus, the on-board passenger assistance system may have access to systems already installed in the vehicle, and therefore may not need to include such systems. Additionally, or alternatively, the on-board passenger assistance system may use a smartphone, tablet etc. being connected to the on-board vehicle assistance system as visual and/or acoustic output systems.

According to an example, the generated image data being stored in the storage medium being accessible and/or annotatable via the human-machine interface unit and/or by external system, e.g., via an app. This allows the user to view and/or annotate the generated image data any time. Thus, image data being generated at a time, during which the user may not be allowed annotating the generated image data, cannot annotate the image data and/or does not want to annotate the generated image data, may be stored and annotated later and may therefore be still available and/or usable for training the neural network.

According to the subject-matter of claim 11, there is provided an on-board passenger assistance method for a vehicle.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to the invention, the method comprises a step of receiving, by the annotating module, the user's input to the generated image data being displayed on a display element of the output unit, particularly, when the autonomous driving mode is activated.

According to the invention, the method comprises a step of training the identifying module, particularly the neural network, based on the user's input received by the annotating module.

These and other aspects of the present invention will become apparent from and elucidated with reference to the embodiments described hereinafter.

### BRIEF DESCRIPTION OF DRAWINGS

Exemplary examples of the invention will be described in the following with reference to the following drawings.
- Fig. 1: shows a schematic block diagram of an exemplary on-board passenger assistance system according to the present invention.
- Fig. 2: shows schematically and exemplarily an example of a vehicle comprising an on-board passenger assistance system according to the present invention.
- Fig. 3: shows a schematic flow diagram of an exemplary on-board passenger assistance method according to the present invention.

The figures are merely schematic representations and serve only to illustrate examples of the invention. Identical or equivalent elements are in principle provided with the same reference signs.

### DESCRIPTION OF EMBODIMENTS

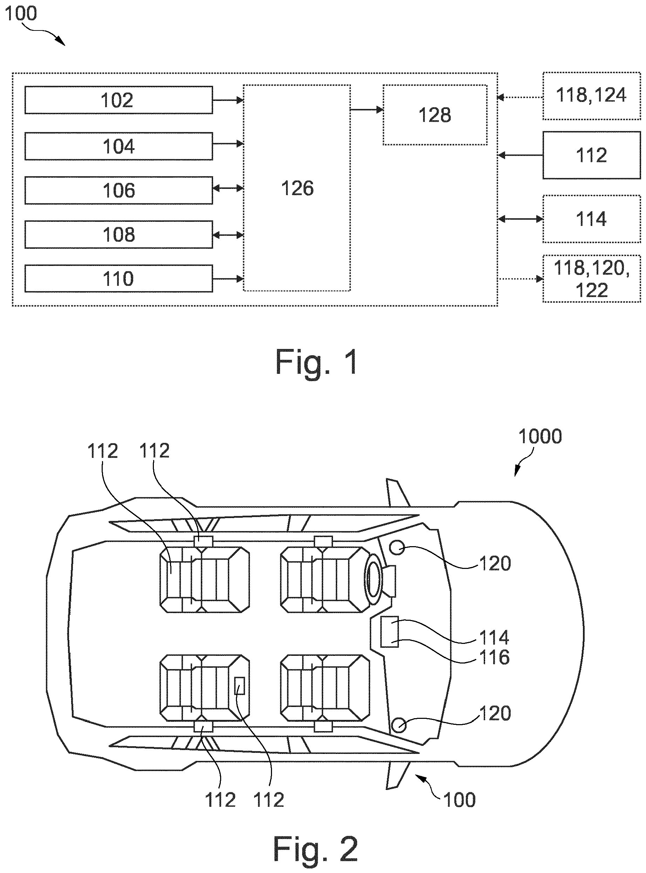

Figure 1 shows schematically and exemplarily a block diagram of an example of an on-board passenger assistance system 100 for a vehicle 1000. The on-board passenger assistance system 100 comprises a passenger monitoring system 102, an identifying module 104, a planning module 106, a suggesting module 108 and an annotating module 110.

The passenger monitoring system 102 comprises a passenger monitoring unit 112, which is configured to generate image data, particularly facial image data, of the monitored passenger (see Figure 2). The identifying module 104 is configured to identify needs of the monitored passenger based on facial expressions shown in the image data generated by the passenger monitoring unit 112, The identifying module 104 comprises a neural network (not shown) being trained to identify the needs of a passenger based on facial expressions.

The planning module 108 is configured to plan routes based on maps and/or traffic to support addressing/fulfilling of the needs being identified by the identifying module 104, the suggesting module 108 is configured to provide suggestions and/or information, e.g., routes planned by the planning module and/or playing a specific song, and the like, to address the needs being identified by the identifying module 104 to a user, e.g., a driver and/or a front-passenger (not shown) via an human-machine interface unit 114 (see also Figure 2). The annotating module 110 is configured to receive the user's input annotating the generated image data being displayed on a display element 116 of the human-machine interface unit 114 (see Figure 2) and/or being displayed on a display element (not shown) of an external system 118, e.g., a smartphone, a tablet etc.

Further, the on-board passenger assistance system 100 is connectable with various external systems 118, which may be comprised in the vehicle 1000 such as an audio playing device 120, e.g., speakers, video playing devices 122, and/or a drive pilot unit 124. The on-board passenger assistance system 100 may use the external system such as the audio playing device 120 and/or the video playing device 122 for addressing the identified need of the passenger, e.g., playing a lullaby, in case the identified need is that the monitored passenger, particularly a child, is tired and tries to sleep. The external systems 118, such as the drive pilot unit 124, may transmit information to the on-board passenger assistance system 100, which may have an influence on the processes of the on-board passenger assistance system 100.

The on-board passenger assistance system 100 may further comprise a central processing unit (CPU) 126, which is configured to receive, process and/or output information from/to the passenger monitoring system 102, the identifying module 104, the planning module 106, the suggesting module 108 and/or the annotating module 110. Further, the on-board passenger assistance system 100 may comprise a storage medium 128 configured to store image data being generated by the passenger monitoring unit 112. The image data stored in the storage medium 128 may be accessible via the human-machine interface unit 114 and/or external devices 118, such as a smartphone, tablet etc. by a wired or wireless connection.

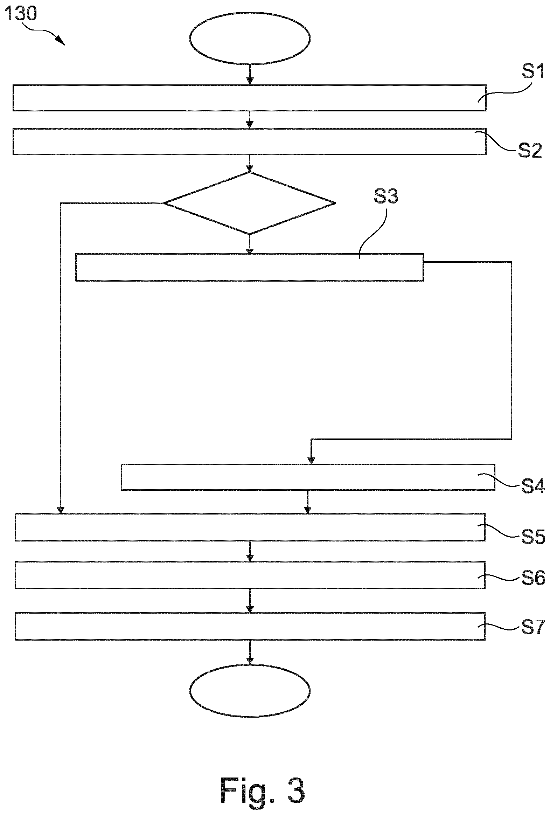

Figure 3 shows schematically and exemplarily an on-board passenger assistance method 130, wherein the steps are not necessarily performed in the shown order:

In a step S1, the passenger monitoring system 102 receives information, whether an (unsupervised) autonomous driving mode of the vehicle 1000 is activated. In a step S2, the passenger monitoring system 102, particularly the passenger monitoring unit 112, generates image data of the passenger, particularly an infant, to be monitored.

When the autonomous driving mode of the vehicle 1000 is activated, the method 130 then proceeds with a step S3, wherein the generated image data is displayed on the display element 116 of the human-machine interface unit 114. In a step S4, the annotating module 110 receives the user's input annotating the generated image data being displayed on a display element 116 of the human-machine interface unit 114. In a step S5, the identifying module 104 identifies needs of the passenger based on facial expressions shown in the generated image data. In a step S6, the panning module 106 plans routes based on maps and/or traffic to support addressing and/or fulfilling the identified needs, and in a step S7, the suggesting module 108 provides suggestions and/or information to address/fulfil the identified need to the user via the human-machine interface unit 114.

When the autonomous driving mode of the vehicle 1000 is deactivated, the method 130 skips the steps S3 and S4 and proceeds with step S5.

Other variations to the disclosed examples can be understood and effected by those skilled in the art in practicing the claimed invention, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 100: on-board passenger assistance system
- 102: passenger monitoring system
- 104: identifying module
- 106: planning module
- 108: suggesting module
- 110: annotating module
- 112: passenger monitoring unit
- 114: human-machine interface unit
- 116: display element
- 118: external system
- 120: audio playing device
- 122: video playing device
- 124: drive pilot unit
- 126: central processing unit (CPU)
- 128: storage medium
- 130: method

- 1000: vehicle

## Claims

1. An on-board passenger assistance system (100) for a vehicle (1000), comprising:
a passenger monitoring system (102) configured to monitor a passenger, the passenger monitoring system (102) comprising a passenger monitoring unit (112) configured to generate image data of the monitored passenger,
an identifying module (104) configured to identify needs of the monitored passenger based on facial expressions shown in the generated image data, the identifying module (104) comprising a neural network being trained to identify the needs of a passenger based on facial expressions,
a planning module (106) configured to plan routes based on maps and/or traffic to support addressing of the needs being identified by the identifying module (104), and
a suggesting module (108) configured to provide suggestions and/or information to address the needs being identified by the identifying module (104) to a user via a human-machine interface unit (114),
**characterized in that** the on-board passenger assistance system (100) further comprises an annotating module (110) being configured to receive the user's input annotating the generated image data being displayed on a display element (116) of the human-machine interface unit (114) and/or being displayed on a display element of an external system (118), and
the neural network being configured to be continuously trained based on the user's input received by the annotating module (110).

2. The on-board passenger assistance system (100) according to claim 1, the user's input being a confirmation or correction of the identified need in the generated image data, and/or the user's input being an assignment of a need to a facial expression shown in the generated image data.

3. The on-board passenger assistance system (100) according to any of claims 1 or 2, the suggesting module (108) further being configured to receive the user's input confirming and/or declining the provided suggestions/information via the human-machine interface unit (114).

4. The on-board passenger assistance system (100) according to claim 1, the identifying module (104) being configured to notify the user of the identified needs via the human-machine interface unit (114).

5. The on-board passenger assistance system (100) according to any of claims 1 to 4, the passenger monitoring system (102) further comprising a control unit being configured to activate displaying the generated image data on a display element (116) of the human-machine interface unit (114) in case an autonomous driving mode is activated, and/or to deactivate displaying the generated image data on the display element (116) of the human-machine interface unit (114) in case the autonomous driving mode is deactivated and no front-passenger is detected.

6. The on-board passenger assistance system (100) according to claim 5, the control unit of the passenger monitoring system (102) further being configured to store the generated image data in a storage medium (128).

7. The on-board passenger assistance system (100) according to any of claims 1 to 6, the annotating module (110) being activated in case an autonomous driving mode is activated and/or the annotating module (110) being manually activatable in case the autonomous driving mode is deactivated.

8. The on-board passenger assistance system (100) according to any of claims 1 to 7, further being connectable to external systems (118) and/or apps, the external system (118) being an audio device (120), and/or a video playing device (122), and/or a smartphone.

9. The on-board passenger assistance system (100) according to any of claims 6 to 8, the generated image data being stored in the storage medium (128) being accessible and/or annotatable via the human-machine interface unit (114) and/or by external systems (118).

10. A vehicle (1000) comprising:
a human-machine interface unit (114), and
an on-board passenger assistance system (100) according to any of claims 1 to 9.

11. An on-board passenger assistance method (130) for a vehicle (1000) according to claim 10, the method (130) comprising the following steps:
receiving, by the passenger monitoring system (102), information whether an autonomous driving mode of the vehicle (1000) is activated or deactivated,
generating, by the passenger monitoring system (120), image data of a passenger, identifying, by the identifying module (104), needs of the passenger based on facial expressions shown in the generated image data,
planning, by the planning module (106), routes based on maps and/or traffic to support addressing the identified needs,
providing, by the suggesting module (108), suggestions and/or information to address the identified needs to a user/driver via the human-machine interface unit (114),
receiving, by the annotating module (110), the user's input to the generated image data being displayed on a display element (116) of the human-machine interface unit (114), and
training the identifying module (104) based on the user's input received by the annotating module (110).

## Patentansprüche

1. Ein fahrzeuginternes Passagierassistenzsystem (100) für ein Fahrzeug (1000), umfassend:
- ein Passagierüberwachungssystem (102), das eingerichtet ist zur Überwachung eines Passagiers, wobei das Passagierüberwachungssystem (102) eine Passagierüberwachungseinheit (112) umfasst, die Bilddaten des überwachten Passagiers erzeugt;
- ein Identifizierungsmodul (104), das eingerichtet ist zur Identifikation von Bedürfnissen des überwachten Passagiers basierend auf Gesichtsausdrücken in den erzeugten Bilddaten, wobei das Identifizierungsmodul (104) ein neuronales Netzwerk umfasst, das darauf trainiert ist, die Bedürfnisse eines Passagiers anhand von Gesichtsausdrücken zu identifizieren;
- ein Planungsmodul (106), das eingerichtet ist zur Planung von Routen basierend auf Karten und/oder Verkehrsbedingungen, um die durch das Identifizierungsmodul (104) erkannten Bedürfnisse zu unterstützen; und
- ein Vorschlagsmodul (108), das eingerichtet ist zur Bereitstellung von Vorschlägen und/oder Informationen zur Erfüllung der durch das Identifizierungsmodul (104) erkannten Bedürfnisse an einen Benutzer über eine Mensch-Maschine-Schnittstelleneinheit (114);
**dadurch gekennzeichnet, dass**
das fahrzeuginterne Passagierassistenzsystem (100) ferner ein Annotierungsmodul (110) umfasst, das eingerichtet ist zur Erfassung der Benutzereingabe, die die erzeugten Bilddaten annotiert und auf einem Anzeigeelement (116) der Mensch-Maschine-Schnittstelleneinheit (114) und/oder auf einem Anzeigeelement eines externen Systems (118) angezeigt wird,
und wobei das neuronale Netzwerk so eingerichtet ist, dass es kontinuierlich basierend auf der vom Annotierungsmodul (110) erfassten Benutzereingabe trainiert wird.

2. Das fahrzeuginterne Passagierassistenzsystem (100) nach Anspruch 1, wobei die Benutzereingabe eine Bestätigung oder Korrektur des in den Bilddaten erkannten Bedürfnisses ist und/oder eine Zuweisung eines Bedürfnisses zu einem Gesichtsausdruck in den Bilddaten umfasst.

3. Das fahrzeuginterne Passagierassistenzsystem (100) nach einem der Ansprüche 1 oder 2, wobei das Vorschlagsmodul (108) zusätzlich eingerichtet ist, die Benutzereingabe zu empfangen, die eine Bestätigung und/oder Ablehnung der bereitgestellten Vorschläge oder Informationen über die Mensch-Maschine-Schnittstelleneinheit (114) umfasst.

4. Das fahrzeuginterne Passagierassistenzsystem (100) nach Anspruch 1, wobei das Identifizierungsmodul (104) eingerichtet ist, den Benutzer über die erkannten Bedürfnisse über die Mensch-Maschine-Schnittstelleneinheit (114) zu benachrichtigen.

5. Das fahrzeuginterne Passagierassistenzsystem (100) nach einem der Ansprüche 1 bis 4, wobei das Passagierüberwachungssystem (102) eine Steuereinheit umfasst, die eingerichtet ist zur Aktivierung der Anzeige der erzeugten Bilddaten auf einem Anzeigeelement (116) der Mensch-Maschine-Schnittstelleneinheit (114), falls ein autonomer Fahrmodus aktiviert ist, und/oder zur Deaktivierung der Anzeige der Bilddaten, falls der autonome Fahrmodus deaktiviert ist und kein Beifahrer erkannt wird.

6. Das fahrzeuginterne Passagierassistenzsystem (100) nach Anspruch 5, wobei die Steuereinheit des Passagierüberwachungssystems (102) ferner eingerichtet ist zur Speicherung der erzeugten Bilddaten in einem Speichermedium (128).

7. Das fahrzeuginterne Passagierassistenzsystem (100) nach einem der Ansprüche 1 bis 6, wobei das Annotierungsmodul (110) aktiviert wird, wenn ein autonomer Fahrmodus aktiviert ist, und/oder manuell aktiviert werden kann, wenn der autonome Fahrmodus deaktiviert ist.

8. Das fahrzeuginterne Passagierassistenzsystem (100) nach einem der Ansprüche 1 bis 7, das ferner mit externen Systemen (118) und/oder Apps verbunden werden kann, wobei das externe System (118) ein Audiogerät (120), ein Videowiedergabegerät (122) und/oder ein Smartphone sein kann.

9. Das fahrzeuginterne Passagierassistenzsystem (100) nach einem der Ansprüche 6 bis 8, wobei die im Speichermedium (128) gespeicherten Bilddaten über die Mensch-Maschine-Schnittstelleneinheit (114) und/oder über externe Systeme (118) zugänglich und/oder annotierbar sind.

10. Ein Fahrzeug (1000), umfassend:
- eine Mensch-Maschine-Schnittstelleneinheit (114); und
- ein fahrzeuginternes Passagierassistenzsystem (100) gemäß einem der Ansprüche 1 bis 9.

11. Ein fahrzeuginternes Passagierassistenzverfahren (130) für ein Fahrzeug (1000) gemäß Anspruch 10, wobei das Verfahren (130) die folgenden Schritte umfasst:
- Empfangen, durch das Passagierüberwachungssystem (102), von Informationen darüber, ob ein autonomer Fahrmodus des Fahrzeugs (1000) aktiviert oder deaktiviert ist;
- Erzeugen, durch das Passagierüberwachungssystem (102), von Bilddaten eines Passagiers;
- Identifizieren, durch das Identifizierungsmodul (104), von Bedürfnissen des Passagiers basierend auf Gesichtsausdrücken in den erzeugten Bilddaten;
- Planen, durch das Planungsmodul (106), von Routen basierend auf Karten und/oder Verkehrsbedingungen, um die erkannten Bedürfnisse zu unterstützen;
- Bereitstellen, durch das Vorschlagsmodul (108), von Vorschlägen und/oder Informationen zur Erfüllung der erkannten Bedürfnisse an einen Benutzer oder Fahrer über die Mensch-Maschine-Schnittstelleneinheit (114);
- Empfangen, durch das Annotierungsmodul (110), der Benutzereingabe zu den auf einem Anzeigeelement (116) der Mensch-Maschine-Schnittstelleneinheit (114) angezeigten Bilddaten;
- Trainieren, durch das Annotierungsmodul (110), des Identifizierungsmoduls (104) basierend auf der vom Annotierungsmodul (110) empfangenen Benutzereingabe.

## Revendications

1. Système embarqué d'assistance aux passagers (100) pour un véhicule (1000), comprenant :
un système de surveillance des passagers (102) configuré pour surveiller un passager, le système de surveillance des passagers (102) comprenant une unité de surveillance des passagers (112) configurée pour générer des données d'image du passager surveillé,
un module d'identification (104) configuré pour identifier des besoins du passager surveillé sur la base d'expressions faciales figurant dans les données d'image générées, le module d'identification (104) comprenant un réseau neuronal entraîné à identifier les besoins d'un passager sur la base d'expressions faciales,
un module de planification (106) configuré pour planifier des itinéraires sur la base de cartes et/ou du trafic afin de répondre aux besoins identifiés par le module d'identification (104), et
un module de suggestion (108) configuré pour fournir des suggestions et/ou des informations pour répondre aux besoins identifiés par le module d'identification (104) à un utilisateur par l'intermédiaire d'une unité d'interface homme-machine (114),
**caractérisé en ce que** le système embarqué d'assistance aux passagers (100) comprend en outre un module d'annotation (110) configuré pour recevoir une entrée de l'utilisateur annotant les données d'image générées affichées sur un élément d'affichage (116) de l'unité d'interface homme-machine (114) et/ou affichées sur un élément d'affichage d'un système externe (118), et
le réseau neuronal étant configuré pour être entraîné en continu sur la base de l'entrée de l'utilisateur reçue par le module d'annotation (110).

2. Système embarqué d'assistance aux passagers (100) selon la revendication 1, l'entrée de l'utilisateur étant une confirmation ou une correction du besoin identifié dans les données d'image générées, et/ou l'entrée de l'utilisateur étant une affectation d'un besoin à une expression faciale montrée dans les données d'image générées.

3. Système embarqué d'assistance aux passagers (100) selon l'une des revendications 1 ou 2, le module de suggestion (108) étant en outre configuré pour recevoir l'entrée de l'utilisateur confirmant et/ou refusant les suggestions/informations fournies par l'intermédiaire de l'unité d'interface homme-machine (114).

4. Système embarqué d'assistance aux passagers (100) selon la revendication 1, le module d'identification (104) étant configuré pour notifier à l'utilisateur les besoins identifiés par l'intermédiaire de l'unité d'interface homme-machine (114).

5. Système embarqué d'assistance aux passagers (100) selon l'une quelconque des revendications 1 à 4, le système de surveillance des passagers (102) comprenant en outre une unité de commande configurée pour activer l'affichage des données d'image générées sur un élément d'affichage (116) de l'unité d'interface homme-machine (114) dans le cas où un mode de conduite autonome est activé, et/ou pour désactiver l'affichage des données d'image générées sur l'élément d'affichage (116) de l'unité d'interface homme-machine (114) dans le cas le mode de conduite autonome est désactivé et qu'aucun passager avant n'a été détecté.

6. Système embarqué d'assistance aux passagers (100) selon la revendication 5, l'unité de commande du système de surveillance des passagers (102) étant en outre configurée pour stocker les données d'image générées sur un support de stockage (128).

7. Système embarqué d'assistance aux passagers (100) selon l'une quelconque des revendications 1 à 6, le module d'annotation (110) étant activé dans le cas où un mode de conduite autonome est activé et/ou le module d'annotation (110) étant activable manuellement dans le cas où le mode de conduite autonome est désactivé.

8. Système embarqué d'assistance aux passagers (100) selon l'une quelconque des revendications 1 à 7, pouvant en outre être connecté à des systèmes (118) et/ou à des applications externes, le système externe (118) étant un dispositif audio (120), et/ou un dispositif de lecture vidéo (122), et/ou un smartphone.

9. Système embarqué d'assistance aux passagers (100) selon l'une quelconque des revendications 6 à 8, les données d'image générées étant stockées dans le support de stockage (128) et étant accessibles et/ou annotables par l'intermédiaire de l'unité d'interface homme-machine (114) et/ou par des systèmes externes (118).

10. Véhicule (1000) comprenant :
une unité d'interface homme-machine (114), et
un système embarqué d'assistance aux passagers (100) selon l'une quelconque des revendications 1 à 9.

11. Procédé (130) d'assistance aux passagers à bord d'un véhicule (1000) selon la revendication 10, le procédé (130) comprenant les étapes suivantes :
la réception, par le système de surveillance des passagers (102), d'informations indiquant si un mode de conduite autonome du véhicule (1000) est activé ou désactivé,
la génération, par le système de surveillance des passagers (120), de données d'image d'un passager,
l'identification, par le module d'identification (104), de besoins du passager sur la base d'expressions faciales figurant dans les données d'image générées,
la planification, par le module de planification (106), d'itinéraires sur la base de cartes et/ou du trafic afin de répondre aux besoins identifiés,
la fourniture, par le module de suggestion (108), de suggestions et/ou d'informations pour répondre aux besoins identifiés à un utilisateur/conducteur par l'intermédiaire de l'unité d'interface homme-machine (114),
la réception, par le module d'annotation (110), de l'entrée de l'utilisateur dans les données d'image générées affichées sur un élément d'affichage (116) de l'unité d'interface homme-machine (114), et
l'entraînement du module d'identification (104) sur la base de l'entrée de l'utilisateur reçue par le module d'annotation (110).
